(19) Europäisches Patentamt
European Patent Office
Office européen des brevets

(11) Veröffentlichungsnummer: **0 326 979**
**A2**

# (12) EUROPÄISCHE PATENTANMELDUNG

(21) Anmeldenummer: **89101500.0**

(22) Anmeldetag: **28.01.89**

(51) Int. Cl.[4]: **C08L 69/00 , //(C08L69/00, 51:04,25:08,33:12)**

(30) Priorität: **05.02.88 DE 3803458**

(43) Veröffentlichungstag der Anmeldung:
**09.08.89 Patentblatt 89/32**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Mühlbach, Klaus, Dr.**
**Dr.-Heinrich-Winter-Strasse 19**
**D-6148 Heppenheim(DE)**
Erfinder: **Brandt, Hermann, Dr.**
**Keltenstrasse 30**
**D-6707 Schifferstadt(DE)**
Erfinder: **Ruppmich, Karl**
**Koenigsbacher Strasse 134**
**D-6700 Ludwigshafen(DE)**

(54) **Thermoplastische Formmasse mit verbesserter Fliessfähigkeit und ihre Verwendung.**

(57) Die Erfindung betrifft thermoplastische Formmasse mit verbesserter Fließfähigkeit, enthaltend, jeweils bezogen auf die Formmasse aus A, B und C,

A) 20 bis 85 Gew.% eines thermoplastischen aromatischen Polycarbonats,

B) 5 bis 50 Gew.% eines Pfropfpolymerisats aus

$b_1$) mindestens einem Elastomeren (Kautschuk), das mindestens 40 Gew.%, bezogen auf B ausmacht und eine mittlere Teilchengröße, bestimmt als $d_{50}$-Wert der integralen Masseverteilung, im Bereich von 50 bis 700 nm aufweist,
wobei das Elastomere $b_1$) einpolymerisiert enthält, jeweils bezogen auf $b_1$),
$b_1a_1$) 50 bis 100 Gew.% mindestens eines Diens aus der Gruppe der konjugierten Diene mit 4 oder 5 C-Atomen,
$b_1a_2$) 0 bis 50 Gew.% mindestens eines Monomeren aus der Gruppe der Alkylacrylate oder Alkylmethacrylate mit 1 bis 8 C-Atomen im Alkylrest oder Styrol oder Acrylnitril
und
$b_2$) einer ersten, auf das Elastomere gepfropften Hülle, die, bezogen auf B, 1 bis 40 Gew.%, ausmacht, sowie
$b_3$) sowie einer weiteren darauf aufpolymerisierten Hülle, die, bezogen auf B, 20 bis 50 Gew.% ausmacht,

C) 5 bis 70 Gew.% eines thermoplastischen Copolymerisats aus, jeweils bezogen auf C,

$c_1$) 50 bis 95 Gew.% Styrol, $\alpha$-Methylstyrol, kernsubstituiertem Styrol und/oder Methylmethacrylat und
$c_2$) 50 bis 5 Gew.% (Meth)Acrylnitril, Methylmethacrylat, Maleinsäureanhydrid und/oder N-substituiertem Maleinimid,
das dadurch gekennzeichnet ist, daß die 1. Pfropfhülle $b_2$) aufgebaut ist aus, jeweils bezogen auf $b_2$)
$b_2a_1$) 45 bis 99,99 Gew.% mindestens eines Alkylacrylats oder Alkylmethacrylats mit 1 bis 8 Kohlenstoffatomen im Alkylrest
$b_2a_2$) 0 bis 50 Gew.% mindestens eines copolymerisierbaren olefinisch ungesättigten Monomeren
und
$b_2a_3$) 0,01 bis 5 Gew.% eines copolymerisierbaren, polyfunktionellen, vernetzenden Monomeren
und ferner die weitere Pfropfhülle $b_3$) aufgebaut ist aus, jeweils bezogen auf $b_3$),
$b_3a_1$) 50 bis 95 Gew.% Styrol, $\alpha$-Methylstyrol, kernsubstituiertem Styrol und/oder Methylmethacrylat und

EP 0 326 979 A2

$b_3a_2$) 50 bis 5 Gew.% (Meth)Acrylnitril, Methylmethacrylat, Maleinsäureanhydrid und/oder N-substituiertem Maleinimid.

## Thermoplastische Formmasse mit verbesserter Fließfähigkeit und ihre Verwendung

Die Erfindung betrifft eine thermoplastische Formmasse aus einem aromatischen Polycarbonat, einem Pfropfmischpolymerisat auf Basis von ABS, dessen Hülle zweistufig aufgebaut ist, und einem thermoplastischen Copolymerisat.

Derartige Mischungen sind z.B. beschrieben in

(1) DE AS 11 70 141
(2) DE-AS 18 10 993
(3) DE-OS 34 14 119
(4) US-PS 4 082 895 und
(5) DE-PS 3 447 249.

Die aus (1) und (2) bekannten PC/ABS-Mischungen zeichnen sich in der Regel durch gute mechanische Eigenschaften, insbesondere gute axiale und multiaxiale Zähigkeiten bis zu tiefen Temperaturen und hohe Vicat-Temperaturen aus. Die Haupteinsatzgebiete sind der Kfz-Sektor, sowie die Elektro- und Haushaltsgeräteindustrie. Die Anforderungen an die Materialien umfassen hohe Zähigkeit - auch bei tiefen Temperaturen -, leichte Verarbeitbarkeit - insbesondere bei kompliziert geformten Werkstücken - sowie ausgezeichnete Oberflächeneigenschaften.

In (3) und (4) sind PC/ABS-Mischungen beschrieben, bei denen das Pfropfmischpolymerisat mehrstufig aufgebaut ist. In (5) ist ein Pfropfmischpolymerisat mit einem vernetzten Butadienkern beschrieben, das eine dreistufig aufgebaute Hülle aufweist.

Die aus (3) und (4) bekannten Formmassen weisen eine gute Zähigkeit auf, zeigen aber noch nicht befriedigende Fließeigenschaften.

Es bestand daher die Aufgabe, Mischungen von Pfropfmischpolymerisaten auf Basis von ABS mit PC vorzuschlagen, die eine gute Zähigkeit und eine verbesserte Fließfähigkeit besitzen.

Die Lösung dieser Aufgabe gelingt - allgemein gesprochen - mit einer Formmasse aus Mischungen mit Pfropfkautschuken auf Basis konjugierter Diene mit zweischaliger Hülle aus einem Acrylat mit 2 bis 8 C-Atomen und vinylaromatischen Monomeren und ethylenisch ungesättigten Comonomeren. Solche Formmassen weisen eine deutlich bessere Fließeigenschaft bei vergleichbarer Zähigkeit auf als solche mit bekannten Pfropfkautschuken.

Unmittelbarer Erfindungsgegenstand ist eine thermoplastische Formmasse mit verbesserter Fließfähigkeit, enthaltend, jeweils bezogen auf die Formmasse aus A, B und C,

A) 20 bis 85 Gew.% eines thermoplastischen aromatischen Polycarbonats,

B) 5 bis 50 Gew.% eines Pfropfpolymerisats aus

$b_1$) mindestens einem Elastomeren (Kautschuk), das mindestens 40 Gew.%, bezogen auf B ausmacht und eine mittlere Teilchengröße, bestimmt als $d_{50}$-Wert der integralen Masseverteilung, im Bereich von 50 bis 700 nm aufweist,

wobei das Elastomere $b_1$) einpolymerisiert enthält, jeweils bezogen auf $b_1$),

$b_1a_1$) 50 bis 100 Gew.% mindestens eines Diens aus der Gruppe der konjugierten Diene mit 4 oder 5 C-Atomen,

$b_1a_2$) 0 bis 50 Gew.% mindestens eines Monomeren aus der Gruppe der Alkylacrylate oder Alkylmethacrylate mit 1 bis 8 C-Atomen im Alkylrest oder Styrol oder Acrylnitril

und

$b_2$) einer ersten, auf das Elastomere gepfropften Hülle, die, bezogen auf B, 1 bis 40 Gew.%, ausmacht, sowie

$b_3$) sowie einer weiteren darauf aufpolymerisierten Hülle, die, bezogen auf B, 20 bis 50 Gew.% ausmacht,

C) 5 bis 70 Gew.% eines thermoplastischen Copolymerisats aus, jeweils bezogen auf C,

$c_1$) 50 bis 95 Gew.% Styrol, $\alpha$-Methylstyrol, kernsubstituiertem Styrol und/oder Methylmethacrylat und

$c_2$) 50 bis 5 Gew.% (Meth)Acrylnitril, Methylmethacrylat, Maleinsäureanhydrid und/oder N-substituiertem Maleinimid,

das dadurch gekennzeichnet ist, daß die 1. Pfropfhülle $b_2$) aufgebaut ist aus, jeweils bezogen auf $b_2$)

$b_2a_1$) 45 bis 99,99 Gew.% mindestens eines Alkylacrylats oder Alkylmethacrylats mit 1 bis 8 Kohlenstoffatomen im Alkylrest

$b_2a_2$) 0 bis 50 Gew.% mindestens eines copolymerisierbaren olefinisch ungesättigten Monomeren

und

$b_2a_3$) 0,01 bis 5 Gew.% eines copolymerisierbaren, polyfunktionellen, vernetzenden Monomeren

und ferner die weitere Pfropfhülle $b_3$) aufgebaut ist aus, jeweils bezogen auf $b_3$),

$b_3a_1$) 50 bis 95 Gew.% Styrol, α-Methylstyrol, kernsubstituiertem Styrol und/oder Methylmethacrylat und
$b_3a_2$) 50 bis 5 Gew.% (Meth)Acrylnitril, Methylmethacrylat, Maleinsäureanhydrid und/oder N-substituiertem Maleinimid.

Die erfindungsgemäße Formmasse enthält z.B. folgende Anteile der Komponenten (in Gew.%, jeweils bezogen auf die Formmasse aus A, B und C):
Komponente A: 20 bis 85, insbesondere 30 bis 70;
Komponente B: 5 bis 50, insbesondere 10 bis 35;
Komponente C: 5 bis 70, insbesondere 10 bis 40.

Bezogen auf 100 Gew.-Teile der Formmasse aus A, B und C, kann sie außerdem 0,1 bis 40 Gew.-Teile, vorzugsweise 0,4 bis 35 Gew.-Teile üblicher Zusatzstoffe (Komponente D) enthalten und kann ferner abgemischt werden z.B. mit 5 bis 60, vorzugsweise 7 bis 40 Gew.-Teilen, jeweils bezogen auf A+B+C, einer Formmasse in Form eines weiteren Pfropfmischpolymerisates auf Basis von ABS (Komponente E).

Komponente A

Erfindungsgemäß geeignete, thermoplastische, aromatische Polycarbonate A sind solche auf Basis der Diphenole (Bisphenole) der Formel (I)

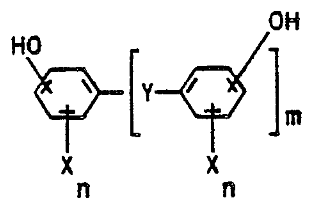

(I),

worin Y eine Einfachbindung, $C_1$-$C_5$-Alkylen, $C_2$-$C_5$-Alkyliden, $C_5$-$C_6$-Cycloalkyliden, -S- oder -$SO_2$-, Chlor, Brom oder Methyl und m null oder eins und n null, eins oder zwei ist.

Erfindungsgemäß geeignete Polycarbonate gemäß Komponente A sind sowohl Homopolycarbonate als auch Copolycarbonate.

Die Diphenole der Formel (I) sind entweder bekannt oder nach bekannten Verfahren herstellbar.

Die Herstellung der erfindungsgemäß geeigneten Polycarbonate gemäß Komponente A ist bekannt und kann beispielsweise nach dem Phasengrenzflächenverfahren oder nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird (bezüglich polydiorganosiloxanhaltigen Polycarbonaten siehe beispielsweise DE-OS 33 34 782).

Geeignete Kettenabbrecher sind beispielsweise Phenol, p-Chlorphenol, p-tert.-Butylphenol oder 2,4,6-Tribromphenol, aber auch langkettige Alkylphenole wie 4-(1,3-Tetramethyl-butyl)-phenol, gemäß DE-A-2 842 005 oder Monoalkylphenole oder Dialkylphenole mit insgesamt 8 bis 20 C-Atomen in den Alkylsubstituenten gemäß DE-A-P 35 06 472 wie beispielsweise p-Nonylphenyl, 3,5-di-tert.-Butylphenol, p-tert.-Octylphenol, p-Dodecylphenol, 2-(3,5-dimethyl-heptyl)-phenol und 4-(3,5-Dimethylheptyl)-phenol.

Die erfindungsgemäß geeigneten Polycarbonate gemäß Komponente A haben mittlere Gewichtsmittelmolekulargewichte (Mw, gemessen beispielsweise durch Ultrazentrifugation oder Streulichtmessung) von 10 000 bis 200 000, vorzugsweise von 20 000 bis 80 000. Dies entspricht relativen Viskositäten $\eta_{rel}$ von 0,8 bis 2,4 (ml/g), insbesondere von 1,1 bis 1,6 (ml/g).

Geeignete Diphenole der Formel (I) sind beispielsweise Hydrochinon, Resorcin, 4,4′-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dichlor-4-hydroxyphenyl)-propan und 2,2-Bis-(3,5-dibrom-4-hydroxyphenyl)-propan, 2,2-Bis-(3,5-dimethyl-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan, 2,2-Bis-(3,5-dibrom-4-hydroxyphenyl)-propan, 2,2-Bis-(3,5-dimethyl-4-hydroxyphenyl-)propan und 1,1-Bis-(4-hydroxyphenyl)-cyclohexan.

Die erfindungsgemäß geeigneten Polycarbonate gemäß Komponente A können in bekannter Weise verzweigt sein, und zwar vorzugsweise durch den Einbau von 0,05 bis 2,0 Mol.%, bezogen auf die Summe der eingesetzten Diphenole, an drei- oder mehr als dreifunktionellen Verbindungen, beispielsweise solchen mit drei oder mehr als drei phenolischen OH-Gruppen.

Bevorzugte Polycarbonate sind neben dem Bisphenol A-Homopolycarbonat die Copolycarbonate von Bisphenol A mit bis zu 15 Mol.%, bezogen auf die Molsumme an Diphenolen, an 2,2-Bis-(3,5-dibrom-4-hydroxyphenyl)-propan.

Die Polycarbonate können auch ganz oder teilweise durch Polyestercarbonate (Copolymere, die sowohl Ester als auch Carbonatstrukturen enthalten) ersetzt werden.

Komponente B

Als Pfropfmischpolymerisat B wird ein Emulsionspfropfcopolymerisat verwendet, das eine zweistufig aufgebaute Hartphase als Pfropfhülle und eine Elastomerphase $b_1$) als Pfropfgrundlage aufweist.

Die Elastomerphase $b_1$) ist ein Homo- oder Copolymerisat, das im wesentlichen aus einem aliphatischen Dien mit 4 bis 5 C-Atomen aufgebaut ist oder zusätzlich zu diesem(n) mindestens ein Monomeres eines Acrylsäurealkylesters mit 1 bis 8 C-Atomen im Alkylrest oder Styrol oder Acrylnitril enthalten kann.

Die als Pfropfgrundlage für das Pfropfmischpolymerisat B dienende Elastomerphase weist eine mittlere Teilchengröße im Bereich von 0,05 bis 0,7 µm ($d_{50}$-Wert der integralen Masseverteilung) vorzugsweise von 0,1 bis 0,45 µm auf. Sie kann monomodal oder bimodal aufgebaut sein, d.h. einen Anteil von Teilchen im Bereich von 0,05 bis 0,18 µm und einen weiteren im Bereich von 0,25 bis 0,5 µm aufweisen, wie dies z.B. in US 4 430 478 beschrieben ist.

Es ist möglich, mit Hilfe der sog. Saatlatexfahrweise die bimodale Verteilung der Partikel der Elastomerphase der Pfropfgrundlage des Pfropfmischpolymerisates B zu erzeugen. Jedoch ist eine solche Präparation, verglichen mit der Agglomeration zeitaufwendiger, da zusätzlich ein Saatlatex und danach vergrößerte Teilchen hergestellt werden müssen und die Polymerisation von Butadien auf einen Saatlatex zur Herstellung größerer Teilchen sehr lange dauert.

Im einzelnen ist das Pfropfmischpolymerisat B aufgebaut aus

$b_1$) mindestens einem Elastomeren (Kautschuk), das mindestens 40 bis annäherend 80, insbesondere 40 bis 65 Gew.%, bezogen auf B ausmacht

wobei das Elastomere $b_1$) einpolymerisiert enthält, jeweils bezogen auf $b_1$),

$b_1a_1$) 50 bis 100 Gew.% mindestens eines Diens aus der Gruppe der konjugierten Diene mit 4 oder 5 C-Atomen,

$b_1a_2$) 0 bis 50 Gew.% mindestens eines Monomeren aus der Gruppe der Alkylacrylate oder Alkylmethacrylate mit 1 bis 8 C-Atomen im Alkylrest oder Styrol oder Acrylnitril.

Das Propfmischpolymerisat B enthält ferner

$b_2$) eine erste auf Elastomere gepfropfte Hülle, die 1 bis 40 Gew.%, vorzugsweise 2 bis 25 Gew.%, bezogen auf B, ausmacht.

Die 1. Propfhülle $b_2$) ist ihrerseits aufgebaut aus, jeweils bezogen auf $b_2$),

$b_2a_1$) 45 bis 99,99 Gew.% mindestens eines Alkylacrylats mit 1 bis 8 Kohlenstoffatomen im Alkylrest

$b_2a_2$) 0 bis 50 Gew.% mindestens eines copolymerisierbaren ungesättigten Monomeren

und

$b_2a_3$) 0,01 bis 5 Gew.% eines copolymerisierbaren, polyfunktionellen, vernetzenden Monomeren.

Als Monomere $b_2a_1$ bis $b_2a_3$ kommen in Betracht:

$b_2a_1$: Acrylate mit 1 bis 8 C-Atomen im linearen, verzweigten oder cyclischen Alkoholteil, vorzugsweise Ethyl-, Butyl- und 2-Ethylhexylacrylat oder Methacrylate mit 1 bis 8 C-Atomen, insbesondere Methylmethacrylat,

$b_2a_2$: Vinylacetat, Acrylnitril, Styrol, Methmethacrlyat und/oder Vinylether,

$b_2a_3$: vernetzend wirkende, ethylenisch ungesättigte Monomere, wie Alkylendioldi(meth)-acrylate, Polyesterdi-(meth)-acrylat, Divinylbenzol, Trivinylbenzol, Triallylcyanurat, Tricyclodecenylacrylat, Allyl-(meth)-acrylat, Butadien oder Isopren.

Schließlich weist das Pfropfmischpolymerisat eine weitere Hülle $b_3$) auf, die, bezogen auf B, 20 bis 50 Gew.%, vorzugsweise 30 bis 50 Gew.%, ausmacht.

Die weitere Pfropfhülle $b_3$) ist aufgebaut aus, jeweils bezogen auf $b_3$)

$b_3a_1$) 50 bis 95 Gew.%, vorzugsweise 60 bis 85 Gew.% Styrol, α-Methylstyrol, kernsubstituiertem Styrol, Methylmethacrylat oder Mischungen daraus

und

$b_3a_2$) 50 bis 5 Gew.%, vorzugsweise 15 bis 40 Gew.% (Meth)Acrylnitril, Methylmethacrylat, Maleinsäureanhydrid, N-substituiertem Maleinimid oder Mischungen daraus.

Als Monomere $b_3a_2$) kommen insbesondere (Meth)Acrylnitril oder Methylmethacrylat oder Mischungen dieser Monomeren in Betracht. Bevorzugt wird AN. Als vinylaromatisches Monomeres $b_3a_1$ wird bevorzugt Styrol verwendet. Es kann jedoch auch Styrol in Mischung mit α-Methylstyrol oder p-Methylstyrol angewendet werden, falls wärmeformbeständigere Produkte gewünscht werden, jedoch ist dies nicht bevorzugt. Zur Herstellung von Formmassen mit hoher Wärmeformbeständigkeit kann (Meth)acrylnitril oder MMA ganz oder teilweise durch Maleinsäureanhydrid oder N-substituierte Maleinimide ersetzt werden.

Die Herstellung des Pfropfmischpolymerisates erfolgt, ausgehend von der in Emulsion erzeugten Pfropfgrundlage, so daß zunächst die Monomeren der 1. Hülle zugegeben werden und in bekannter Weise in Emulsion aufgebracht werden.

Auf dieses im wesentlichen mit Acrylaten gepfropfte Elastomere wird nun in einem zweiten Schritt die 2. Pfropfhülle aufpolymerisiert.

Die Pfropfung in beiden Verfahrensstufen wird dabei so durchgeführt, daß zu der wäßrigen Emulsion der jeweiligen Pfropfgrundlage die Monomerenmischung (das Monomere) der den Pfropfreis bildenden Monomeren im vorstehend genannten Gewichtsverhältnis zugegeben wird. Bei der Pfropfung können dabei gegebenenfalls weitere Emulgatoren zugesetzt werden. Die Polymerisation wird durch radikalbildende Initiatoren, wie Azoverbindungen oder Peroxide, ausgelöst. Die Polymerisationstemperatur kann zwischen 30 bis 100 °C liegen. Für die Durchführung der Polymerisation können übliche Hilfsstoffe wie Regler und Stabilisatoren zugegen sein.

Komponente C

Das Copolymerisat C ist aufgebaut aus Monomeren, die eine harte Phase bilden. Es kann auf üblichem Wege durch Polymerisieren eines vinylaromatischen Monomeren $C_1$ mit 8 bis 12 C-Atomen, MMA oder Mischungen daraus in Anteilen von 95 bis 50 Gew.%, insbesondere 80 bis 65 Gew.%, in Mischung mit einem ethylenisch ungesättigten Monomeren $C_2$ in Anteilen von 50 bis 5, insbesondere von 35 bis 20 Gew.% hergestellt werden. Als vinylaromatische Monomere $C_1$ kommen Styrol sowie die Alkylstyrole, hierbei insbesondere das α-Methylstyrol oder das p-Methylstyrol, in Frage. α-Methylstyrol wird vorwiegend dann eingesetzt, wenn hohe Wärmeformbeständigkeit der Formmassen eingestellt werden soll. Üblicherweise werden für diesen Zweck Mischungen von Styrol und Acrylnitril mit bis zu 30 Gew.% α-Methylstyrol angewendet. Als ethylenisch ungesättigte Monomere kommen (Meth-)acrylnitril, MMA, Maleinsäureanhydrid, N-substituierte Maleinimide oder Mischungen daraus in Frage. Bevorzugt werden Copolymerisate angewendet, die 20 bis 35 Gew.% Acrylnitril und 80 bis 65 Gew.% Styrol enthalten. Zur Herstellung von Formmassen mit hoher Wärmeformbeständigkeit kann man aber auch in der Gruppe $C_2$ (Meth)acrylnitril oder MMA ganz oder teilweise durch Maleinsäureanhydrid oder N-substituierte Maleinimide ersetzt werden. Diese Copolymerisate sind im Handel erhältlich und können z.B. nach der Lehre der DE-AS 10 01 001 bzw. nach der Lehre der DE-PS 10 03 436 hergestellt werden. Der Molekulargewichtsbereich des Copolymerisats beträgt 80 000 bis 250 000 (Gewichtsmittel $\overline{M}_w$ aus Lichtstreuung. Dies entspricht Viskositätszahlen, VZ, von 35 bis 130 (ml/g), insbesondere 50 bis 100 (ml/g).

Komponente D

Die erfindungsgemäße Formmasse kann als Komponente C Zusatzstoffe enthalten, die für Polycarbonate, SAN-Polymerisate und Pfropfmischpolymerisate auf Basis von ABS etc. oder deren Mischungen typisch und gebräuchlich sind. Als solche Zusatzstoffe seien beispielsweise genannt: Füllstoffe - insbesondere Glas- und Kohlenstoffasern -, sowie Materialien zur Erhöhung der Abschirmung von elektromagnetischen Wellen (z.B. Metallflocken, -pulver, -fasern, metallbeschichtete Füllstoffe), Farbstoffe, Pigmente, Antistatika, Antioxidantien, Stabilisatoren, auch Flammschutzmittel und insbesondere die Schmiermittel, die für die Weiterverarbeitung der Formmasse, z.B. bei der Herstellung von Formkörpern bzw. Formteilen erforderlich sind. Von den Schmiermitteln sind insbesondere diejenigen auf Basis von N,N′-Bisstearylethylendiamin (Accrawachs) zu nennen, die bevorzugt angewendet werden, um die Verarbeitungseigenschaften der Formmassen auf einem hohen Niveau zu halten. Diese sind überraschenderweise besser geeignet als Silikonöle, Pluriole® und die Stearate.

Weiterhin kann die Formmasse Treibmittel enthalten zur Herstellung von geschäumten Teilen (z.B.

Azodicarbonamid).

Bei den Flammschutzmitteln kann es sich im weitesten Sinne handeln um Halogen, vorzugsweise Brom enthaltende nieder- und hochmolekulare (aromatische) Verbindungen, ausgewählt aus den Klassen der Aryle, Arylether, Arylalkylether, Arylamine, Arylimide, Arylanhydride, Phenole, Arylalkylimide und Arylsiloxane. Die folgende Zusammenstellung zeigt charakteristische Beispiele; sie beinhaltet keine Einschränkung:

Aryle: Hexabrombenzol, bromiertes oligomeres Styrol (BOS), Pentabrommethylbenzol;

Arylether: Dekabromdiphenylehter, Octabromdiphenylether, Poly(2,6-dibrom-1,4-phenylen)ether;

Arylalkylether: Bis(2,4,6-tribromphenoxi)ethan, Bis(pentabromphenoxi)ethan, Poly(tetrabrombisphenol-A-glycidyl)-ether, Poly(tetrabromhydrochinon-1,2-ethyliden)ether;

Arylamine: Tris(2,4-dibromphenyl)amin, Bis(pentabromphenyl)amin; Tribromanilin;

Arylanhydride: Tetrabromphthalsäureanhydrid;

Arylimide: Tetrabrom:Tetrabromphthalsäureimid;

Arylalkyl-imide: Ethylen-bis(tetrabromphthalimid);

Phenole: Tetrabrombisphenol-A;

Arylsiloxane: Tetrakis(2,4,6-tribromphenyl)siloxan.

Die halogenhaltigen Flammschutzmittel werden bevorzugt zusammen mit Synergisten wie Antimon-, Wismut- und Phosphorverbindungen eingesetzt. Es können auch halogenfreie Flammschutzmittel, insbesondere organische Phosphorverbindungen in Kombination mit geringen Mengen an hochfluorierten Polymeren (z.B. PTFE), verwendet werden.

Bevorzugt eingesetzt werden:

Octabromdiphenylether, DE 79® von Great Lakes, Poly(2,6-dibrom-1,4-phenylen)ether, PO 64 P® von Great Lakes, Poly(tetrabrombisphenol-A-glycidyl)ether, F 2400® von Makhteshim, Ethylenbis-(tetrabromphthalimid), Saytex BT 93® von Saytech und Bis(2,4,6-tribromphenoxi)ethan, Firemaster FF 680® von Great Lakes.

Besonders bevorzugt ist Poly- bzw. Oligo(tetrabrombisphenol A)-carbonat, BC 52® von Great Lakes und Poly(tetrabrombisphenol-A-glycidyl)ether (F 2400 von Makhteshim) oder teilhalogenierte Polycarbonate (Copolymere).

Komponente E

Die erfindungsgemäße Formmasse kann zusätzlich ein weiteres Pfropfmischpolymerisat auf Basis von ABS enthalten, das zum Unterschied von B grobteilig ist und in Masse, Lösung oder Masse-Suspension hergestellt sein kann. Dies wird vorzugsweise in Lösung hergestellt. Die Herstellung ist bekannt und z.B. in der US-PS 4 430 470 hinreichend beschrieben.

Die Herstellung des Pfropfmischpolymerisats und der Hartphase von E erfolgt gleichzeitig in einem Schritt, wobei eine Pfropfausbeute von 5 bis 30 %, vorzugsweise von 5 bis 20 %, eingestellt wird. Unter Pfropfausbeute wird das Gewichtsverhältnis der tatsächlich aufgepfropften Pfropfmonomeren zu den insgesamt verwendeten Pfropfmonomeren x 100 verstanden. Hierzu werden 100 Gew.-Teile einer Mischung aus mindestens einem vinylaromatischen Monomeren mit 8 bis 12 C-Atomen, MMA oder Mischungen davon und (Meth)acrylnitril oder MMA im Gewichtsverhältnis 50:50 bis 95:5, vorzugsweise 60:40 bis 90:10 und insbesondere 65:35 bis 80:20 in Gegenwart von 3 bis 33 Gew.-Teilen, vorzugsweise 4 bis 21 Gew.-Teilen, insbesondere 6 bis 14 Gew.-Teilen und ganz besonders bevorzugt 6 bis 10 Gew.-Teilen eines Elastomeren in Masse, vorzugsweise zusätzlich in Gegenwart eines inerten Lösungsmittels, oder in Masse-Suspension in an sich bekannter Weise polymerisiert, so daß danach der mittlere Teilchendurchmesser der resultierenden Teilchen aus der Pfropfung im Bereich von 0,5 bis 5 µm, vorzugsweise 1,0 bis 2,0 µm, liegt. Bei diesem Prozess entsteht nach Phaseninversion durch Pfropfung und Inklusion eines Teils der Monomeren auf bzw. in das Elastomere das Pfropfmischpolymerisat $b_{21}$. Der restliche Anteil der Monomeren bildet die Hartphase von E. Das Massenverhältnis von Elastomer zu aufgepfropftem und inkludiertem Monomeren in beträgt 4:6 bis 6:4.

Die vinylaromatischen Monomeren sind die gleichen, die auch bei der Herstellung von B Verwendung finden. Vorzugsweise wird lediglich Styrol zusammen mit Acrylnitril angewendet. Als Lösungsmittel kommen z.B. in Frage Cyclohexan oder Alkylaromaten, insbesondere Ethylbenzol.

Als Elastomeres kommt vorzugsweise Polybutadien mit cis-Gehalten von 30 bis 40 % und 1,2-Vinylgehalten von 7 bis 14 % in Frage. Es können auch Copolymerisate von Butadien mit 15 bis 40 Gew.% aus vinylaromatischen Monomeren, insbesondere Styrol, angewendet werden. Ferner können auch Gemische aus Polybutadien- und Styrol-Butadienblock-Kautschuken angewendet werden. Eine bevorzugte Arbeitsweise zur Herstellung des Pfropfmischpolymerisates ist in der DE-OS 14 95 089 beschrieben.

Die Zusammensetzung der Pfropfhülle von E kann von der von B abweichen. Ferner können die Copolymeren C und die Hartphase von E gleich oder verschieden sein und auch von den Pfropfhüllen abweichen.

Herstellung der Formmasse

Das Mischen der Komponenten A, B, C und gegebenenfalls D und E kann nach allen bekannten Methoden erfolgen. Vorzugsweise geschieht jedoch das Mischen der Komponenten A, B, C und gegebenenfalls D und E bei Temperaturen von 200 bis 320 °C durch gemeinsames Extrudieren, Kneten oder Verwalzen der Komponenten, wobei die Komponenten notwendigenfalls zuvor aus der bei der Polymerisation erhaltenen Lösung oder aus der wäßrigen Dispersion isoliert worden sind. Die in wäßriger Dispersion erhaltenen Produkte der Pfropfmischpolymerisation (Komponenten B) kann aber auch teilweise entwässert oder direkt als Dispersion mit der Komponente C vermischt werden. Dabei erfolgt die vollständige Trocknung der Pfropfmischpolymerisate B während des Vermischens. Es ist aber auch möglich, die teilweise entwässerte Komponente B oder deren Dispersion direkt mit C dem Polycarbonat A und der Komponente D und E zu vermischen, wobei dann während des Vermischens die vollständige Trocknung von B erfolgt.

Es kann vorteilhaft sein, einzelne Komponenten vorzumischen. Auch das Mischen der Komponenten in Lösung und Entfernen der Lösungsmittel ist möglich.

Die erfindungsgemäße Formmasse kann nach den bekannten Verfahren der Thermoplastverarbeitung bearbeitet werden, also z.B. durch Extrudieren, Spritzgießen, Kalandrieren, Hohlkörperblasen, Pressen oder Sintern. Bevorzugt werden aus den nach dem erfindungsgemäßen Verfahren hergestellten Formmassen durch Spritzgießen Formteile für den Automobilbau hergestellt.

Die erfindungsgemäßen Parameter sind wie folgt bestimmt worden:

1. die mittlere Teilchengröße und die Teilchengrößenverteilung der in Emulsion hergestellten Elastomerteilchen wird aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 - (1972), Seiten 782 bis 796, bestimmt wurden. Diese Messung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.% der Teilchen einen kleineren Durchmesser haben als der Durchmesser, der dem $d_{50}$-Wert entspricht. Ebenso haben dann 50 Gew.% der Teilchen einen größeren Durchmesser als der $d_{50}$-Wert. Zur Charakterisierung der Breite der Teilchengrößenverteilung der Kautschukteilchen können neben dem $d_{50}$-Wert (mittlerer Teilchendurchmesser) die sich aus der integralen Massenverteilung ergebenden $d_{10}$- und $d_{90}$-Werte herangezogen werden. Der $d_{10}$- und $d_{90}$-Wert der integralen Massenverteilung sind dabei entsprechend dem $d_{50}$-Wert definiert mit dem Unterschied, daß sie auf 10 bzw. 90 Gew.% der Teilchen bezogen sind.
Die mittlere Teilchengröße der Elastomerpartikel der in Lösung hergestellten Komponente E wurde mittels Elektronenmikroskopie bestimmt (Auszählung).

2.

a) Die relative Lösungsviskosität $\eta_{rel.}$ des eingesetzten Polycarbonats (A) wurde in einer 0,5 %igen Lösung in Methylenchlorid bei 23 °C gemessen;

b) Die Viskositätszahl VZ der Komponente C, z.B. der SAN-Copolymerisate, wurde in 0,5 %iger Lösung in Dimethylformamid bei 23 °C bestimmt. Dies gilt auch für die Hartmatrix von E.

3. Die Kerbschlagzähigkeit, $a_K$, in [kJ/m²] der Proben wurde nach DIN 53 453 an bei 260 °C gespritzten Normkleinstäben bei 23 °C gemessen.

4. Die Durchstoßarbeit, $W_{ges}$, im Plastechontest (Nm), wurde nach DIN 53 453 an bei 270 °C spritzgegossenen 2 mm dicken Rundscheiben bestimmt. Die Prüfung erfolgte bei Raumtemperatur (23 °C).

5. Der Schmelzindex, MFI, wurde nach DIN 53 735 bei einer Temperatur von 260 °C und 5 kp Belastung ermittelt. (Die Einheit ist g/10 Min.).

6. Der B-Wert nach Vicat wurde nach DIN 53 460 bestimmt.

Für die Herstellung erfindungsgemäßer Formmassen und Massen für Vergleichsversuche wurden die

nachfolgend beschriebenen Produkte verwendet. Die in Teilen angegebenen Mengen beziehen sich auf das Gewicht.

Komponente A

Als Komponente A wurde ein handelsübliches Polycarbonat auf Basis von Bisphenol A mit einer relativen Lösungsviskosität $\eta_{rel}$ von 1,30 ml/g eingesetzt.

Komponente B

BI: Propfkautschuk 1

Herstellung der Elastomeren $b_1$:

Durch Polymerisation von 60 Teilen Butadien in Gegenwart einer Lösung von 0,5 Teilen tert.-Dodecylmercaptan, 0,7 Teilen Kalium-$C_{14}$-$C_{18}$-Alkylsulfonat als Emulgator, 0,2 Teilen Kaliumperoxidisulfat und 0,2 Teilen Natriumpyrophosphat in 80 Teilen Wasser wurde bei 65° C ein Polybutadienlatex hergestellt. Der Umsatz betrug 98 %.

Es wurde ein Polybutadienlatex erhalten, dessen mittlere Teilchengröße bei 0,1 µm liegt. Dieser Latex wird durch Zusatz von 25 Teilen einer Emulsion eines Copolymeren aus 96 Teilen Ethylacrylat und 4 Teilen Acrylsäureamid mit einem Feststoffgehalt von 10 Gew.% agglomeriert, wobei ein Polybutadienlatex mit einer mittleren Teilchengröße von 0,3 bis 0,4 µm entstand.

Aufpfropfen der 1. Pfropfhülle $b_2$

Der agglomerierte Polymerlatex wurde mit Wasser verdünnt, so daß nach vollständiger Polymerisation der Pfropfmonomeren der 1. Pfropfhülle ein Feststoffgehalt von 40 Gew.% resultiert. Nach Zugabe von, jeweils bezogen auf $b_2$, 0,75 % Emulgator, 0,5 % Dodecylmercaptan und 0,3 % Kaliumperoxodisulfat wurden 5 % einer Mischung aus n-Butylacrylat und Dihydrodicyclopentadienylacrylat im Gewichtsverhältnis 98:2 langsam zugegeben. Die Polymerisation erfolgte unter Rühren des Ansatzes bei 65° C. Der Umsatz, bezogen auf $b_2$, war praktisch quantitativ.

Aufpfropfen der 2. Pfropfhülle $b_3$

Zu 100 Teilen der nach Aufpfropfen der 1. Schale erhaltenen wäßrigen Dispersion wurden nach Zusetzen von 37 Teilen Wasser und 0,07 Teilen Kaliumperoxodisulfat 24,5 Teile einer Mischung aus Styrol und Acrylnitril im Verhältnis 70:30 innerhalb von 4 Stunden zugeführt. Die Polymerisation erfolgte unter Rühren des Ansatzes bei 75° C. Der Umsatz, bezogen auf Styrol-Acrylnitril war praktisch quantitativ. Die erhaltene Pfropfkautschukdispersion wurde mittels Calciumchloridlösung gefällt, das abgetrennte Pfropfmischpolymerisat mit destilliertem Wasser gewaschen und im warmen Luftstrom getrocknet.

B II: Pfropfkautschuk 2

Es wurde wie bei der Herstellung von Pfropfkautschuk 1 verfahren, jedoch wurden zum Aufbau der 1. Schale $b_2$) 20 Gew.% einer Mischung aus Ethylhexylacrylat unmd Allymethacrylat im Gewichtsverhältnis 99,5 zu 0,5 verwendet und gepfropft.

III: Pfropfkautschuk 3

wurde wie Pfropfkautschuk 1 hergestellt, jedoch wurden 30 Gew.%

Butylacrylat/Dihydrocyclopentadienylacrylat im Gewichtsverhältnis 98/2 angewendet.

B IV: Pfropfkautschuk 4 (nicht erfindungsgemäß; zum Vergleich)

140 Gew.-Teile Polybutadienlatex $b_1$ wurden mit 34 Teilen einer Mischung aus Styrol und Acrylnitril (Verhältnis 76:24) und 50 Teilen Wasser gemischt und unter Rühren nach Zusatz von weiteren 0,08 Teilen Kaliumpersulfat und 0,05 Teilen Lauroylperoxid 3 Stunden auf 65 °C erhitzt. Danach wurde das Produkt mittels Calciumchloridlösung bei 95 °C aus der Dispersion gefällt, mit Wasser gewaschen und im warmen Luftstrom getrocknet.

B V: Pfropfkautschuk 5 (nicht erfindungsgemäß; zum Vergleich)

Wie Pfropfkautschuk 4, jedoch wurden anstelle von 34 Teilen der Mischung aus Styrol und Acrylnitril, 28 Teilen einer Mischung aus Styrol, Acrylnitril und n-Butylacrylat im Gewichtsverhältnis 52:22:26 auf $b_1$ aufgepfropft.

B VI: Pfropfkautschuk 6 (nicht erfindungsgemäß; zum Vergleich)

120 Teile des erhaltenen Polybutadien-Latex $b_1$ wurden mit 23 Teilen einer Mischung aus Styrol und Acrylnitril (Verhältnis 70:30) und 50 Teilen Wasser gemischt und unter Rühren nach Zusatz von weiteren 0,08 Teilen Kaliumpersulfat und 0,05 Teilen Lauroylperoxid 3 Stunden auf 65 °C erhitzt. Nach Beendigung der ersten Stufe der Pfropfpolymerisation wurden ohne weitere Zusatzstoffe 20 Teile Methylmethacrylat während 2 Stunden zugegeben. Die Temperatur betrug während des Zulaufs 65 °C.

Nach Beendigung der Pfropfpolymerisation wurde das Produkt mittels Kalziumchloridlösung bei 95 °C aus der Dispersion gefällt, mit Wasser gewaschen und im warmen Luftstrom getrocknet.

Die Aufarbeitung des erhaltenen Pfropfpolymerisates erfolgte jeweils wie unter Pfropfpolymerisat 1 beschrieben.

Komponente C

CI: SAN Copolymerisat (S/AN = 75/25) VZ = 87 ml/g.
CII: Copolymerisat aus α-Methylstyrol und AN im Gewichtsverhältnis 75/25; VZ = 55 ml/g.

Komponente D

DI: Es wurde ein aus 10 Gew.% Ethylenoxid und 90 Gew.% Propylenoxid aufgebautes symmetrisches Dreiblockcopolymerisat XYX mit dem Molgewicht 2800 des Mittelblocks als Schmiermittel verwendet.
DII: Als weiteres Schmiermittel diente N,N′-Bisstearylethylendiamin (Accrawachs).

Komponente E

Polybutadien wird in einer Mischung aus Styrol, Acrylnitril und Ethylbenzol gelöst. Das Styrol/Acrylnitril-Verhältnis beträgt 75/25 Gew.%. Die Mischung wird unter starkem Rühren in einem kontinuierlichen Prozeß in drei hintereinander angeordneten Reaktoren mit steigendem Temperaturprofil polymerisiert. Während der Polymerisation polymerisiert ein Teil des Styrol/Acrylnitril-Gemisches auf das Polybutadien und bildet das Pfropfpolymere, während der restliche Anteil das ein Copolymeres (Hartmatrix) bildet. Das Polymerisationsprodukt wurde entgast, extrudiert und anschließend granuliert.

Folgende Analysedaten wurden gefunden:
9,3 % Polybutadien, 68 % Polystyrol, 22,7 % Acrylnitril. Die Propfausbeute beträgt 8,5 %. Der durch Auszählung der Teilchen auf den elektronenmikroskopischen Aufnahmen bestimmte mittlere Durchmesser beträgt 1,4 µm. Somit erhält das Produkt 17 % eines grobteiligen Pfropfkautschuks und 83 % eines Copolymeren mit einer VZ von 84 ml/g.

Beispiele 1 bis 5 und Vergleichsversuche I bis IV

Die in der Tabelle 1 angegebenen Gewichtsteile der Komponenten A bis E wurden in trockener Form auf einem Fluidmischer gemischt und bei 260 °C auf einen Doppelschneckenextruder, z.B. ZSK-Typ von Werner & Pfleiderer, extrudiert. Aus dem getrockneten Granulat der Proben wurden die Formkörper für die Eigenschaftsprüfungen durch Spritzgießen hergestellt.

Tabelle

| Beispiel | Komponente | | | | | | | |
|---|---|---|---|---|---|---|---|---|
| | A | B | | C | | D | | E |
| | | Art | Menge | Art | Menge | Art | Menge | |
| 1 | 60 | BI: | 18 | CI: | 22 | DII | 1 | - |
| 2 | 50 | BII: | 26 | CII: | 24 | - | | - |
| 3 | 65 | BIII: | 16 | CI: | 19 | DII | 1 | - |
| 4 | 60 | BII: | 18 | CI: | 22 | DI | 0,75 | - |
| 5 | 60 | BI: | 10 | CI: | 15 | DII | 1 | 15 |
| Vergleichsversuche | | | | | | | | |
| I [1)] | 60 | BIV: | 18 | CII: | 22 | | - | - |
| II [2)] | 60 | BV: | 20 | CI: | 20 | 0.75 | - | - |
| III | 60 | BVI: | 18 | CI: | 22 | | - | - |
| IV | 60 | BIV: | 18 | CII: | 22 | DI | 0,75 | - |
| Beispiel | MFT [g/10 min] | $a_k$ [kJ/m²] | Wg [Nm] | Vicat [°C] | | | | |
| 1 | 19 | 30 | 49 | 120 | | | | |
| 2 | 16 | 26 | 45 | 120 | | | | |
| 3 | 20 | 34 | 58 | 124 | | | | |
| 4 | 14 | 32 | 48 | 119 | | | | |
| 5 | 24 | 34 | 55 | 120 | | | | |
| Vergleichsversuche | | | | | | | | |
| I | 9 | 33 | 49 | 130 | | | | |
| II | 10 | 15 | 30 | 116 | | | | |
| III | 8 | 32 | 47 | 120 | | | | |
| IV | 12 | 33 | - | 127 | | | | |

1) gemäß der Lehre der DE-OS 18 10 993
2) gemäß der Lehre der DE-OS 34 14 119

Wie aus dem Vergleich zu erkennen ist, führt der erfindungsgemäße Schalenaufbau der Pfropfkautschuke zu Formmassen mit gegenüber den Vergleichsmassen verbesserter Fließfähigkeit und gleichzeitig guter Zähigkeit.

**Ansprüche**

1. Thermoplastische Formmasse mit verbesserter Fließfähigkeit, enthaltend, jeweils bezogen auf die Formmasse aus A, B und C,

A) 20 bis 85 Gew.% eines thermoplastischen aromatischen Polycarbonats,

B) 5 bis 50 Gew.% eines Pfropfpolymerisats aus

$b_1$) mindestens einem Elastomeren (Kautschuk), das mindestens 40 Gew.%, bezogen auf B ausmacht und eine mittlere Teilchengröße, bestimmt als $d_{50}$-Wert der integralen Masseverteilung, im Bereich von 50 bis 700 nm aufweist,
wobei das Elastomere $b_1$) einpolymerisiert enthält, jeweils bezogen auf $b_1$),

$b_1a_1$) 50 bis 100 Gew.% mindestens eines Diens aus der Gruppe der konjugierten Diene mit 4 oder 5 C-Atomen,
$b_1a_2$) 0 bis 50 Gew.% mindestens eines Monomeren aus der Gruppe der Alkylacrylate oder Alkylmethacrylate mit 1 bis 8 C-Atomen im Alkylrest oder Styrol oder Acrylnitril
und
$b_2$) einer ersten, auf das Elastomere gepfropften Hülle, die, bezogen auf B, 1 bis 40 Gew.%, ausmacht, sowie
$b_3$) sowie einer weiteren darauf aufpolymerisierten Hülle, die, bezogen auf B, 20 bis 50 Gew.% ausmacht,
C) 5 bis 70 Gew.% eines thermoplastischen Copolymerisats aus, jeweils bezogen auf C,
$c_1$) 50 bis 95 Gew.% Styrol, α-Methylstyrol, kernsubstituiertem Styrol und/oder Methylmethacrylat und
$c_2$) 50 bis 5 Gew.% (Meth)Acrylnitril, Methylmethacrylat, Maleinsäureanhydrid und/oder N-substituiertem Maleinimid,
dadurch gekennzeichnet, daß die 1. Pfropfhülle $b_2$) aufgebaut ist aus, jeweils bezogen auf $b_2$)
$b_2a_1$) 45 bis 99,99 Gew.% mindestens eines Alkylacrylats oder Alkylmethacrylats mit 1 bis 8 Kohlenstoffatomen im Alkylrest
$b_2a_2$) 0 bis 50 Gew.% mindestens eines copolymerisierbaren olefinisch ungesättigten Monomeren
und
$b_2a_3$) 0,01 bis 5 Gew.% eines copolymerisierbaren, polyfunktionellen, vernetzenden Monomeren
und ferner die weitere Pfropfhülle $b_3$) aufgebaut ist aus, jeweils bezogen auf $b_3$),
$b_3a_1$) 50 bis 95 Gew.% Styrol, α-Methylstyrol, kernsubstituiertem Styrol und/oder Methylmethacrylat und
$b_3a_2$) 50 bis 5 Gew.% (Meth)Acrylnitril, Methylmethacrylat, Maleinsäureanhydrid und/oder N-substituiertem Maleinimid.

2. Thermoplastische Formasse nach Anspruch 1, dadurch gekennzeichnet, daß sie 30 bis 70 Gew.% A, 10 bis 35 Gew.% B und 10 bis 40 Gew.% C enthält.

3. Thermoplastische Formmasse nach Anspruch 1 oder 2, dadurch gekennzeichnet, daß, jeweils bezogen auf B,
das Elastomere $b_1$) 40 bis 65 Gew.%
die erste Hülle $b_2$) 2 bis 25 Gew.% und
die zweite Hülle $b_3$) 30 bis 50 Gew.%
ausmacht.

4. Thermoplastische Formmasse nach Anspruch 1, dadurch gekennzeichnet, daß das Elastomere $b_1$) ausschließlich Butadien einpolymerisiert enthält und als Pfropfmonomere $b_2a_1$) der 1. Hülle Ethylacrylat, Butylacrylat, und/oder Ethylhexylacrylat verwendet werden.

5. Thermoplastische Formmasse nach Anspruch 1, dadurch gekennzeichnet, daß als Pfropfmonomere zum Aufbau der weiteren Hülle $b_3$ eine Mischung aus Styrol ($b_3a_1$) und Acrylnitril ($b_3a_2$) verwendet werden.

6. Formmasse nach Anspruch 1, dadurch gekennzeichnet, daß sie, bezogen auf 100 Gew.-Teile A+B+C, 0,1 bis 40 Gew.-Teile übliche Zusatzstoffe (Komponente D) aufweist.

7. Formmasse nach Anspruch 6, dadurch gekennzeichnet, daß als Zusatzstoff N,N′-Bisstearylethylendiamin (Accrawachs) in Mengen von 0,1 bis 2,5 Gew.-Teilen verwendet wird.

8. Verfahren zur Herstellung einer Formmasse gemäß Anspruch 1 durch an sich bekanntes Mischen der Komponenten A, B und C.

9. Verwendung der Formmasse gemäß Anspruch 1 zur Herstellung von Formteilen.